(19) Europäisches Patentamt
European Patent Office
Office européen des brevets

(11) **EP 3 076 014 A1**

(12) **EUROPEAN PATENT APPLICATION**

(43) Date of publication:
**05.10.2016 Bulletin 2016/40**

(51) Int Cl.:
***F03D 17/00*** *(2016.01)*

(21) Application number: **15180809.4**

(22) Date of filing: **12.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **30.03.2015 JP 2015069217**

(71) Applicant: **MITSUBISHI HEAVY INDUSTRIES, LTD.**
**Tokyo 108-8215 (JP)**

(72) Inventors:
• **ISHII, Hidekazu**
**TOKYO, 108-8215 (JP)**
• **HONDA, Akihiro**
**TOKYO, 108-8215 (JP)**
• **FUKAMI, Koji**
**TOKYO, 108-8215 (JP)**

(74) Representative: **Intès, Didier Gérard André et al**
**Cabinet Beau de Loménie**
**158 rue de l'Université**
**75340 Paris Cedex 07 (FR)**

(54) **FATIGUE EVALUATION SYSTEM, WIND TURBINE GENERATOR HAVING THE SAME, AND FATIGUE EVALUATION METHOD FOR WIND TURBINE GENERATOR**

(57)  A wind turbine generator includes an anemometer for measuring wind velocity of wind, a statistical processing part for calculating a mean value U and a standard deviation $\sigma$ of the wind velocity on the basis of a measurement result of the anemometer, a frequency-distribution calculation part configured to calculate occurrence frequency distribution of a fluctuating dynamic pressure of the wind, on the basis of a product of the mean value U and the standard deviation $\sigma$ calculated by the statistical processing part, and a fatigue estimation part for estimating fatigue of the wind turbine generator, on the basis of the occurrence-frequency distribution of the fluctuating dynamic pressure.

FIG. 1

EP 3 076 014 A1

## Description

TECHNICAL FIELD

The present disclosure relates to a fatigue evaluation system, a wind turbine generator having the same, and a fatigue evaluation method for a wind turbine generator.

BACKGROUND

Wind turbine power generation facilities have become increasingly popular in recent years in view of preservation of the environment. A wind turbine power generation facility generates electric power by utilizing wind as renewable energy. Generally, a wind turbine power generating facility includes a rotor including a plurality of rotor blades for receiving wind energy and a rotor hub, a generator to which a rotational force of the rotor is transmitted via a drivetrain, a nacelle which supports the rotor rotatably and houses the generator, and a tower which supports the nacelle.

Patent Document 1 discloses a monitoring system for a wind turbine power generation facility configured to evaluate fatigue of components such as rotor blades and a drivetrain of a wind turbine power generation facility using a Rainflow process.

Citation List

Patent Literature

Patent Document 1: EP1760311A

SUMMARY

The monitoring system described in Patent Document 1 requires time-series data of a load at a target section of a wind turbine generator that is to be evaluated. It is difficult to store the time-series data of a load for a long period of time given the amount of the data. Further, in the monitoring system described in Patent Document 1, there is a high load due to the calculation process for calculating load amplitude and occurrence frequency from the time-series data of a load. Thus, a long processing time is required to evaluate fatigue.

An object of at least some embodiments of the present invention is to provide an evaluation system for a wind turbine generator capable of performing simplified fatigue evaluation which does not require acquisition of time-series data of a load, and of reducing the time for the fatigue evaluation, as well as a wind turbine generator having the same and a fatigue evaluation method for a wind turbine generator.

(1) A fatigue evaluation system for a wind turbine generator according to at least some embodiments of the present invention includes: an anemometer for measuring wind velocity of wind; a statistical processing part for calculating a mean value U and a standard deviation $\sigma$ of the wind velocity on the basis of a measurement result of the anemometer; a frequency-distribution calculation part configured to calculate occurrence frequency distribution of a fluctuating dynamic pressure of the wind, on the basis of a product of the mean value U and the standard deviation $\sigma$ calculated by the statistical processing part; and a fatigue estimation part for estimating fatigue of the wind turbine generator, on the basis of the occurrence-frequency distribution of the fluctuating dynamic pressure.

As a result of intensive research by the present inventors, it was found that fatigue of many sections of a wind turbine generator (e.g. a blade root of each blade, an upper end part of the tower, and a base part of the tower) can be evaluated by a simplified method based on occurrence frequency distribution of a fluctuating dynamic pressure calculated on the basis of a product of statistics of wind velocity (the mean value U and the standard deviation $\sigma$). The principle of this evaluation method is as follows.

In a wind turbine generator, a wind load applied to a rotor is transmitted to a nacelle base plate via main bearings supporting the rotor, and then to a tower via the nacelle base plate. Thus, fluctuating stress is generated at many sections (e.g. a blade root of each blade, an upper end part of the tower or a base part of the tower) disposed in such a transmission path of a load. The fluctuating stress shows a strong correlation to a fluctuation component of a load due to wind acting on the rotor. Here, fatigue of a material depends on occurrence frequency of stress amplitude of fluctuating stress generated in the material. Thus, it is possible to evaluate fatigue of each section of the wind turbine generator on the basis of the occurrence frequency distribution of a fluctuating dynamic pressure of wind representing a fluctuation component of a load due to wind acting on the rotor.

The above configuration (1) is based on the above findings of the present inventors, and capable of performing fatigue evaluation on the basis of occurrence frequency distribution of a fluctuating dynamic pressure calculated on the basis of a product of statistics of wind velocity (the mean value U and the standard deviation $\sigma$), even if time-series data of a load is not available. Further, it is possible to reduce the operation time required to evaluate fatigue as compared to a case where fatigue is evaluated on the basis of occurrence frequency of load amplitude calculated by a known method (e.g. Rainflow method) from time-series data of a load.

(2) In some embodiments, in the above configuration (1), the frequency-distribution calculation part is configured to calculate occurrence frequency $n_i$ of the fluctuating dynamic pressure $P_i$ obtained on the basis of a product $X_1$ (= U × $\sigma$) of the mean value U and the standard deviation $\sigma$, and the fatigue estimation part is configured to estimate the fatigue on the basis of the occurrence frequency $n_i$ of the fluctuating dynamic pressure $P_i$.

A fluctuation component of a load due to wind acting on the rotor can be represented by using a product $X_1$ (= U $\times$ $\sigma$) of the mean value U and the standard deviation $\sigma$ of wind velocity.

In view of this, in the above configuration (2), a fluctuating dynamic pressure $P_i$ is obtained on the basis of the product $X_1$ (= U $\times$ $\sigma$) of the mean value U and the standard deviation $\sigma$ of wind velocity, and the occurrence frequency $n_i$ of the fluctuating dynamic pressure $P_i$ is counted. In this way, it is possible to evaluate fatigue with high accuracy even if time-series data of a load is not available, and to reduce the time for fatigue evaluation.

(3) In one embodiment, in the above configuration (2), the frequency-distribution calculation part is configured to calculate the occurrence frequency $n_i$ of the fluctuating dynamic pressure $P_i$ on the basis of a product $X_2$ (= U $\times$ $\sigma$ $\times$ $C_T$) obtained by multiplying the product $X_1$ further by a thrust coefficient $C_T$ which is determined in accordance with a pitch angle of a blade of the wind turbine generator.

In a wind turbine generator, the thrust coefficient $C_T$ may vary in accordance with a control of the pitch angles of the blades. For instance, in a typical variable-pitch wind turbine, the pitch angle of the blades is controlled to maintain the power output at the rated output or less, and the thrust coefficient $C_T$ decreases in a region with high wind velocity of not less than the rated wind velocity as compared to in a region with the rated wind velocity.

In this regard, with the above configuration (3), the occurrence frequency $n_i$ of the fluctuating dynamic pressure $P_i$ is calculated on the basis of a product $X_2$ (= U $\times$ $\sigma$ $\times$ $C_T$) obtained by multiplying the product $X_1$ further by the thrust coefficient $C_T$ determined in accordance with a pitch angle of the blades of the wind turbine generator. Thus, it is possible to reduce an influence of a pitch control of the wind turbine generator on the result of fatigue evaluation. As a result, it is possible to evaluate fatigue of the wind turbine generator with higher accuracy.

(4) In another embodiment, in the above configuration (2), the frequency-distribution calculation part is configured to calculate the occurrence frequency $n_i$ of the fluctuating dynamic pressure $P_i$ on the basis of a product $X_2$' (= U $\times$ $\sigma$ $\times$ $C_M$) obtained by multiplying the product $X_1$ further by a moment coefficient $C_M$ which is determined in accordance with a pitch angle of a blade of the wind turbine generator.

In the wind turbine generator, the moment coefficient $C_M$ may vary in accordance with a control of the pitch angles of the blades. For instance, in a typical variable-pitch wind turbine, the pitch angle of the blades is controlled to maintain the power output at the rated output or less, and the moment coefficient $C_M$ decreases in a region with high wind velocity of not less than the rated wind velocity as compared to in a region with the rated wind velocity.

In this regard, with the above configuration (4), the occurrence frequency $n_i$ of the fluctuating dynamic pressure $P_i$ is calculated on the basis of a product $X_2$' (= U $\times$ $\sigma$ $\times$ $C_M$) obtained by multiplying the product $X_1$ further by a moment coefficient $C_M$ which is determined in accordance with a pitch angle of the blades of the wind turbine generator. Thus, it is possible to reduce an influence of a pitch control of the wind turbine generator on the result of fatigue evaluation. As a result, it is possible to evaluate fatigue of the wind turbine generator with higher accuracy.

(5) In some embodiments, in any one of the above configurations (1) to (4), the frequency-distribution calculation part is configured to calculate occurrence frequency $n_i$ of the fluctuating dynamic pressure $P_i$ obtained on the basis of a product $X_3$ (= $\rho$ $\times$ U $\times$ $\sigma$) of the mean value U, the standard deviation $\sigma$, and an air density $\rho$. The fatigue estimation part is configured to estimate the fatigue on the basis of the occurrence frequency $n_i$ of the fluctuating dynamic pressure $P_i$.

A fluctuation component of a load due to wind acting on the rotor can be represented by using a product $X_3$ (= $\rho$ $\times$ U $\times$ $\sigma$) of the mean value U and the standard deviation $\sigma$ of wind velocity and an air density $\rho$.

In view of this, with the above configuration (5), a fluctuating dynamic pressure $P_i$ is obtained on the basis of the product $X_3$ (= $\rho$ $\times$ U $\times$ $\sigma$) of the mean value U and the standard deviation $\sigma$ of wind velocity and an air density $\rho$, and the occurrence frequency $n_i$ of the fluctuating dynamic pressure $P_i$ is counted. In this way, it is possible to evaluate fatigue with high accuracy even if time-series data of a load is not available, and to reduce the time of fatigue evaluation.

(6) In some embodiments, in any one of the above configurations (1) to (5), the fatigue estimation part is configured to estimate the fatigue on the basis of a comparison result between: reference occurrence-frequency distribution of the fluctuating dynamic pressure corresponding to a known fatigue lifetime related to the wind turbine generator, and the occurrence frequency distribution of the fluctuating dynamic pressure calculated by the frequency-distribution calculation part.

With the above configuration (6), it is possible to evaluate, in a quantitative way, the progress of the fatigue using a known fatigue lifetime as a measure, on the basis of a comparison result between: reference occurrence-frequency distribution of the fluctuating dynamic pressure corresponding to a known fatigue lifetime; and occurrence frequency distribution of the fluctuating dynamic pressure calculated by the frequency-distribution calculation part.

(7) In some embodiments, in the above configuration (6), the frequency-distribution calculation part is configured to calculate occurrence frequency $n_i$ of the fluctuating dynamic pressure $P_i$ obtained on the basis of a product $X_1$ (= U $\times$ $\sigma$) of the mean value U and the standard deviation $\sigma$. The fatigue estimation part is configured to estimate the fatigue on the basis of a ratio $n_i/N_i$ of the occurrence frequency $n_i$ of the fluctuating dynamic

pressure $P_i$ to occurrence frequency $N_i$ of the fluctuating dynamic pressure $P_i$ in the reference occurrence-frequency distribution.

(8) Further, in some embodiments, in the above configuration (7), the fatigue estimation part is configured to calculate a fatigue damage level D on the basis of a following equation (1), and to estimate the fatigue on the basis of the fatigue damage level D:

$$D = \sum \frac{n_i}{N_i} \qquad \cdots (1)$$

In the above equation, i is a range number of the fluctuating dynamic pressure in the occurrence-frequency distribution or the reference occurrence-frequency distribution.

With the above configuration (7) or (8), it is possible to evaluate, in a quantitative way, the progress of the fatigue using the known fatigue lifetime as a measure, on the basis of a ratio $n_i/N_i$ of the occurrence frequency distribution $n_i$ of the fluctuating dynamic pressure $P_i$ calculated by the frequency-distribution calculation part to the occurrence frequency $N_i$ of the fluctuating dynamic pressure $P_i$ in the reference occurrence-frequency distribution.

(9) In some embodiments, in any one of the above configurations (6) to (8), the known fatigue lifetime is a design lifetime of the wind turbine generator, and the reference occurrence frequency distribution is occurrence frequency distribution of the fluctuating dynamic pressure taken into account in designing the wind turbine generator.

With the above configuration (9), it is possible to evaluate, in a quantitative way, the progress of the fatigue using a design lifetime of the wind turbine generator as a measure, on the basis of a comparison result between the occurrence frequency distribution of the fluctuating dynamic pressure taken into account in designing the wind turbine generator and actual occurrence frequency distribution of the fluctuating dynamic pressure calculated by the frequency-distribution calculation part.

(10) A wind turbine generator according to at least some embodiments of the present invention includes: a rotor configured to rotate by receiving wind; a generator to which a rotational force of the rotor is transmitted, the generator being configured to be driven by the rotational force; and the fatigue evaluation system according to any one of the above (1) to (9).

With the above configuration (10), by having the fatigue evaluation system according to any one of the above (1) to (9), it is possible to evaluate fatigue with high accuracy even if time-series data of a load is not available, and to reduce the time for fatigue evaluation.

(11) A method of evaluating fatigue of a wind turbine generator according to at least some embodiments of the present invention includes: a wind-velocity measurement step of measuring wind velocity of wind; a statistical processing step of calculating a mean value U and a standard deviation σ of the wind velocity on the basis of a measurement result of the wind velocity; a frequency-distribution calculation step of calculating occurrence-frequency distribution of a fluctuating dynamic pressure of the wind, on the basis of a product of the mean value U and the standard deviation σ calculated in the statistical processing step; and a fatigue estimation step of estimating fatigue of the wind turbine generator, on the basis of the occurrence frequency distribution of the fluctuating dynamic pressure.

According to the above method (11), it is possible to evaluate fatigue on the basis of the occurrence frequency distribution of a fluctuating dynamic pressure calculated on the basis of a product of statistics of wind velocity (the mean value U and the standard deviation σ), even if time-series data of a load is not available. Further, it is possible to reduce the operation time required to evaluate fatigue as compared to a case where fatigue is evaluated on the basis of the occurrence frequency of load amplitude calculated by a known method (e.g. Rainflow method) from time-series data of a load.

(12) In some embodiments, in the above method (11), the frequency-distribution calculation step includes calculating occurrence frequency $n_i$ of the fluctuating dynamic pressure $P_i$ obtained on the basis of a product $X_1$ (= U × σ) of the mean value U and the standard deviation σ. Further, the fatigue estimation step includes estimating the fatigue on the basis of the occurrence frequency $n_i$ of the fluctuating dynamic pressure $P_i$.

According to the above method (12), a fluctuating dynamic pressure $P_i$ is obtained on the basis of the product $X_1$ (= U × σ) of the mean value U and the standard deviation σ of wind velocity, and the occurrence frequency $n_i$ of the fluctuating dynamic pressure $P_i$ is counted. In this way, it is possible to evaluate fatigue with high accuracy even if time-series data of a load is not available, and to reduce the time for fatigue evaluation.

(13) In some embodiments, in the above method (11) or (12), the fatigue estimation step includes estimating the fatigue on the basis of a comparison result between: reference occurrence-frequency distribution of the fluctuating dynamic pressure corresponding to a known fatigue lifetime related to the wind turbine generator; and the occurrence frequency distribution of the fluctuating dynamic pressure calculated in the frequency-distribution calculation step.

According to the above method (13), it is possible to evaluate, in a quantitative way, the progress of the fatigue using the known fatigue lifetime as a measure, on the basis of a comparison result between: reference occurrence-frequency distribution of the fluctuating dynamic pressure corresponding to a known fatigue lifetime; and occurrence frequency distribution of the fluctuating dynamic pressure calculated by the frequency-distribution calculation part.

(14) In some embodiments, in the above method (13), the frequency-distribution calculation step in-

cludes calculating occurrence frequency $n_i$ of the fluctuating dynamic pressure $P_i$ obtained on the basis of a product $X_1$ (= U × σ) of the mean value U and the standard deviation σ. Further, the fatigue estimation step includes estimating the fatigue on the basis of a ratio $n_i/N_i$ of the occurrence frequency $n_i$ of the fluctuating dynamic pressure $P_i$ to occurrence frequency $N_i$ of the fluctuating dynamic pressure $P_i$ in the reference occurrence-frequency distribution.

(15) Further, in some embodiments, in the above method (14), the fatigue estimation step includes calculating a fatigue damage level D on the basis of a following equation (1), and estimating the fatigue on the basis of the fatigue damage level D.

$$D = \sum \frac{n_i}{N_i} \qquad \cdots (1)$$

In the above equation, i is a range number of the fluctuating dynamic pressure in the occurrence-frequency distribution or the reference occurrence-frequency distribution.

According to the above method (14) or (15), it is possible to evaluate, in a quantitative way, the progress of the fatigue using the known fatigue lifetime as a measure, on the basis of a ratio $n_i/N_i$ of the occurrence frequency $n_i$ of the fluctuating dynamic pressure $P_i$ calculated by the frequency-distribution calculation part to occurrence frequency $N_i$ of the fluctuating dynamic pressure $P_i$ in the reference occurrence-frequency distribution.

(16) In some embodiments, in any one of the above methods (13) to (15), the known fatigue lifetime is a design lifetime of the wind turbine generator, and the reference occurrence frequency distribution is occurrence frequency distribution of the fluctuating dynamic pressure taken into account in designing the wind turbine generator.

According to the above method (16), it is possible to evaluate, in a quantitative way, the progress of the fatigue using a design lifetime of the wind turbine generator as a measure, on the basis of a comparison result between the occurrence frequency distribution of a fluctuating dynamic pressure taken into account in designing the wind turbine generator and actual occurrence frequency distribution of a fluctuating dynamic pressure calculated by the frequency-distribution calculation part.

According to at least one embodiment of the present invention, it is possible to evaluate fatigue of a wind turbine generator in a simplified way even if time-series data of a load is not available, and to reduce the time for fatigue evaluation.

BRIEF DESCRIPTION OF DRAWINGS

FIG. 1 is an overall configuration diagram of a wind turbine generator according to one embodiment.
FIG. 2 is a graph of an example of time-series data of wind velocity.
FIG. 3 is a graph of an example of frequency distribution of a fluctuating dynamic pressure $P_i$ (ρUσ).
FIG. 4 is a graph of a relationship between wind velocity and a thrust coefficient.
FIG. 5 is a graph of an example of frequency distribution of a fluctuating dynamic pressure $P_i$ (ρUσ$C_T$).
FIG. 6 is a graph of a relationship between wind velocity and a moment coefficient.
FIG. 7 is a graph of an example of frequency distribution of a fluctuating dynamic pressure $P_i$ (ρUσ$C_M$).
FIG. 8 is a graph of an example of wind-velocity frequency distribution taken into account in designing.
FIG. 9 is a graph of an example of wind-velocity standard deviation distribution taken into account in designing.
FIG. 10 is a graph of occurrence frequency of a fluctuating dynamic pressure taken into account in designing.
FIG. 11 is a flowchart of a fatigue evaluation method for a wind turbine generator according to one embodiment.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

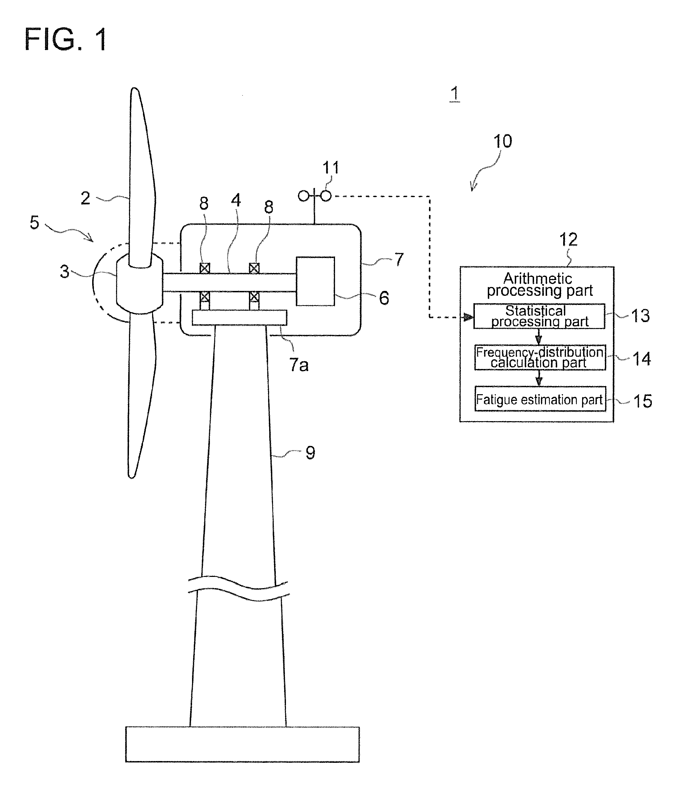

FIG. 1 is an overall configuration diagram of a wind turbine generator 1 according to one embodiment.

As illustrated in the drawing, a wind turbine generator 1 according to one embodiment includes at least one blade 2, a rotation shaft 4 configured to rotate along with the blade 2, and a generator 6 configured to be driven by rotation energy of a rotor 5 including the blade 2 and the rotation shaft 4. The wind turbine generator 1 may be placed on land or on ocean.

In the specific configuration example illustrated in the drawing, a plurality of blades 2 is mounted around a hub 3. The hub 3 is mounted to an end portion of the rotation shaft 4, and the rotor 5 includes the blades 2, the hub 3, and the rotation shaft 4. The rotation shaft 4 is supported rotatably to a nacelle base plate 7a of a nacelle 7 via main bearings 8. The nacelle base plate 7a is mounted to an end portion of a tower 9. With this configuration, the rotor 5 integrally rotates when the blades 2 receive wind. Rotation energy of the rotor 5 is inputted to the generator 6 so that electric power is generated in the generator 6.

In the illustrated example, the rotation shaft 4 and the generator 6 are connected directly to each other.

However, a drivetrain such as a gear and a hydraulic transmission may be disposed between the rotation shaft 4 and the generator 6. Here, a hydraulic transmission includes a hydraulic pump mounted to the rotation shaft 4 and a hydraulic motor connected to the hydraulic pump via a high-pressure oil line and a low-pressure oil line. The pressurized oil generated by the hydraulic pump is supplied to the hydraulic motor via the high-pressure oil line, and the hydraulic motor is driven by this pressurized oil. The low-pressure working oil having performed work in the hydraulic motor is returned again to the hydraulic pump via the low-pressure oil line. The output shaft of the hydraulic motor is connected to the input shaft of the generator 6, so that rotation of the hydraulic motor is inputted into the generator 6 and electric power is generated.

In the present embodiment, the above wind turbine generator 1 further includes a fatigue-evaluation system 10 capable of performing simplified fatigue evaluation which does not require acquisition of time-series data of a load. The fatigue-evaluation system 10 is to evaluate fatigue of each section of the wind turbine generator 1. A section to be subject to the fatigue evaluation is, for example, a blade root of each blade 2, a tip end part of the tower 9, a base part of the tower 9, or the like.

In some embodiments, the fatigue-evaluation system 10 includes an anemometer 11 for measuring wind velocity and an arithmetic processing part 12 for evaluating fatigue of the wind turbine generator 1 on the basis of the measurement result of the anemometer 11. Here, the arithmetic processing part 12 may be disposed on a control device inside the nacelle 7 or the tower 9 of the wind turbine generator 1, or on a supervisory control and data acquisition device (SCADA) installed at a remote place.

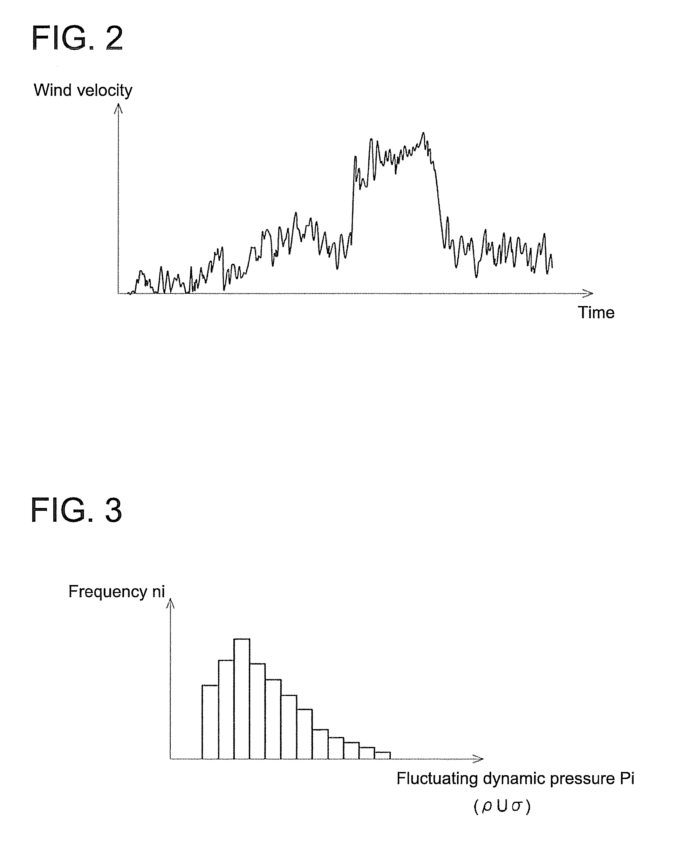

The anemometer 11 is disposed on the wind turbine generator 1 or in the vicinity of the same. In the illustrated example, the anemometer 11 is disposed on an upper part of the nacelle 7 of the wind turbine generator 1. For instance, the anemometer 11 measures wind velocity continuously, and obtains time-series data of wind velocity as illustrated in FIG. 2.

The arithmetic processing part 12 includes a statistical processing part 13, a frequency-distribution calculation part 14, and a fatigue estimation part 15.

The statistical processing part 13 is configured to calculate a mean value U of wind velocity (wind-velocity mean) and a standard deviation $\sigma$ on the basis of the measurement result of the anemometer 11 as illustrated in FIG. 2. For instance, the mean value U and the standard deviation $\sigma$ of wind velocity are calculated every predetermined period (e.g. 10 minutes) by a statistical method.

The frequency-distribution calculation part 14 is configured to calculate occurrence frequency distribution of a fluctuating dynamic pressure $P_i$ of wind, on the basis of a product of the mean value U and the standard deviation $\sigma$ calculated by the statistical processing part 13.

A fluctuation component of a load due to wind acting on the rotor 5 can be represented by using a product $X_1$ (= U $\times$ $\sigma$) of the mean value U and the standard deviation $\sigma$ of wind velocity. Here, the frequency-distribution calculation part 14 may be configured to calculate occurrence frequency $n_i$ of a fluctuating dynamic pressure $P_i$ obtained on the basis of the product $X_1$ (= U $\times$ $\sigma$) of the mean value U and the standard deviation $\sigma$ of wind velocity. More specifically, a fluctuation component of a load due to wind acting on the rotor 5 can be represented by using a product $X_3$ (= $\rho$ $\times$ U $\times$ $\sigma$) of the mean value U and the standard deviation $\sigma$ of wind velocity and an air density $\rho$. In this case, the frequency-distribution calculation part 14 may be configured to calculate occurrence frequency $n_i$ of a fluctuating dynamic pressure $P_i$ obtained on the basis of the product $X_3$ (= $\rho$ $\times$ U $\times$ $\sigma$) of the mean value U, the standard deviation $\sigma$, and the air density $\rho$. In this way, it is possible to obtain frequency distribution of a fluctuating dynamic pressure $P_i$ as illustrated in FIG. 3, which is a graph of an example of frequency distribution of a fluctuating dynamic pressure $P_i$ ($\rho U \sigma$).

The fatigue-estimation part 15 is configured to estimate fatigue of a wind turbine generator on the basis of occurrence frequency distribution of a fluctuating dynamic pressure calculated by the frequency-distribution calculation part 14. Specifically, the fatigue estimation part 15 is configured to estimate fatigue on the basis of occurrence frequency $n_i$ of a fluctuating dynamic pressure $P_i$ as illustrated in FIG. 3. The fatigue estimation by the fatigue estimation part 15 will be described later.

As a result of intensive research by the present inventors, it was found that fatigue of many sections of the wind turbine generator 1 (e.g. a blade root of each blade 2, an upper end part of the tower 9, and a base part of the tower 9) can be evaluated by a simplified method based on occurrence frequency distribution of a fluctuating dynamic pressure calculated on the basis of a product of statistics regarding wind velocity (the mean value U and the standard deviation $\sigma$). The principle of this evaluation method is as follows.

In the wind turbine generator, a wind load applied to the rotor 5 is transmitted to the nacelle base plate 7a via the main bearings 8 supporting the rotor 5, and also to the tower 9 via the nacelle base plate 7a. Thus, fluctuating stress is generated at many sections (e.g. a blade root of each blade 2, an upper end part of the tower 9 or a base part of the tower 9) disposed in such a transmission path of a load. The fluctuating stress shows a strong correlation to a fluctuation component of a load due to wind acting on the rotor 5. Here, the fatigue of a material depends on occurrence frequency of stress amplitude of fluctuating stress generated in the material. Thus, it is possible to evaluate fatigue of each section of the wind turbine generator 1 on the basis of the occurrence frequency distribution of a fluctuating dynamic pressure of wind representing a fluctuation component of a load due to wind acting on the rotor 5.

The above configuration is based on the above findings of the present inventors, and capable of performing fatigue evaluation on the basis of the occurrence frequency distribution of a fluctuating dynamic pressure calculated on the basis of a product of statistics regarding wind velocity (the mean value U and the standard deviation $\sigma$), even when time-series data of a load is not available. Further, it is possible to reduce the operation time required to evaluate fatigue as compared to a case where fatigue is evaluated on the basis of the occurrence frequency of load amplitude calculated by a known method (e.g. Rainflow method) from time-series data of a load. Specifically, a fluctuating dynamic pressure $P_i$ is obtained on the basis of the product $X_1$ (= U $\times$ $\sigma$) of the mean value U and the standard deviation $\sigma$ of wind velocity, or more specifically, the product $X_3$ (= $\rho$ $\times$ U $\times$ $\sigma$) of the mean value U, the standard deviation $\sigma$ of the wind velocity, and the air density $\rho$, and the occurrence frequency $n_i$ of the fluctuating dynamic pressure $P_i$ is counted. In this way, it is possible to evaluate fatigue with high accuracy even if time-series data of a load is not available, and to reduce the time for fatigue evaluation.

In one embodiment, the frequency-distribution calculation part 14 is configured to calculate the occurrence frequency $n_i$ of the fluctuating dynamic pressure $P_i$ on the basis of a product $X_2$ (= U $\times$ $\sigma$ $\times$ $C_T$) obtained by multiplying the product $X_1$ further by a thrust coefficient $C_T$ that is determined in accordance with a pitch angle of the blades 2 of the wind turbine generator 1.

More specifically, the frequency-distribution calculation part 14 is configured to calculate the occurrence frequency $n_i$ of the fluctuating dynamic pressure $P_i$ on the basis of a product $X_2$ (= $\rho$ $\times$ U $\times$ $\sigma$ $\times$ $C_T$) obtained by multiplying the product $X_3$ of the mean value U and the standard deviation $\sigma$ of wind velocity and an air density $\rho$ further by the thrust coefficient $C_T$.

In this case, the fatigue estimation part 15 is configured to estimate fatigue on the basis of the occurrence frequency $n_i$ of the fluctuating dynamic pressure $P_i$.

In this configuration, the thrust coefficient $C_T$ is taken into account as a factor that affects a load M applied to the rotor 5, and fatigue is estimated with higher accuracy.

The load M (thrust load) due to wind acting on the rotor 5 is calculated from the following equation (2).

$$M = 1 \diagup 2\, \rho\, U^2 C_T A \qquad \cdots (2)$$

In the above equation, M is a load (thrust load), $\rho$ is an air density, U is a mean value of wind velocity, $C_T$ is a thrust coefficient, and A is a rotor area.

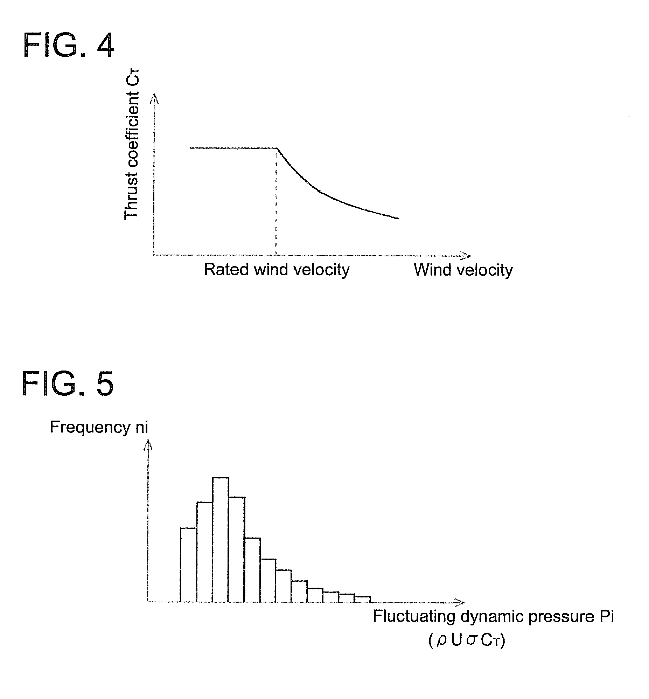

In the wind turbine generator 1, the thrust coefficient $C_T$ may vary in accordance with a control of the pitch angle of the blades 2. For instance, in a typical variable-pitch wind turbine, as illustrated in FIG. 4, the pitch angle of the blades 2 is controlled to maintain the power output at the rated output or less, and the thrust coefficient $C_T$ decreases in a region with high wind velocity of not less than the rated wind velocity as compared to in a region with the rated wind velocity. Here, FIG. 4 is a graph of a relationship between wind velocity and a thrust coefficient.

In view of this, in the above configuration, the frequency-distribution calculation part 14 is configured to calculate the occurrence frequency $n_i$ of the fluctuating dynamic pressure $P_i$ on the basis of a product $X_2$ (= U $\times$ $\sigma$ $\times$ $C_T$) obtained by multiplying the product $X_1$ further by the thrust coefficient $C_T$ determined in accordance with a pitch angle of the blades 2, or more specifically, a product $X_2$ (= $\rho$ $\times$ U $\times$ $\sigma$ $\times$ $C_T$) obtained by multiplying the product $X_3$ of the mean value U and the standard deviation $\sigma$ of wind velocity and an air density $\rho$ further by the thrust coefficient $C_T$. In this way, it is possible to obtain frequency distribution of a fluctuating dynamic pressure $P_i$ taking account of the thrust coefficient $C_T$ as illustrated in FIG. 5. Here, FIG. 5 is a graph of an example of frequency distribution of a fluctuating dynamic pressure $P_i$ ($\rho U \sigma C_T$).

With the above configuration, it is possible to reduce the influence of the pitch control of the wind turbine generator 1 on the fatigue evaluation result, and to evaluate fatigue of the wind turbine generator 1 with higher accuracy.

In another embodiment, the frequency-distribution calculation part 14 is configured to calculate the occurrence frequency $n_i$ of the fluctuating dynamic pressure $P_i$ on the basis of a product $X_2'$ (= U $\times$ $\sigma$ $\times$ $C_M$) obtained by multiplying the product $X_1$ further by a moment coefficient $C_M$ that is determined in accordance with a pitch angle of the blades 2 of the wind turbine generator 1.

More specifically, the frequency-distribution calculation part 14 is configured to calculate the occurrence frequency $n_i$ of the fluctuating dynamic pressure $P_i$ on the basis of a product $X_2'$ (= $\rho$ $\times$ U $\times$ $\sigma$ $\times$ $C_M$) obtained by multiplying the product $X_3$ of the mean value U and the standard deviation $\sigma$ of wind velocity and an air density $\rho$ further by the moment coefficient $C_M$.

In this case, the fatigue estimation part 15 is configured to estimate fatigue on the basis of the occurrence frequency $n_i$ of the fluctuating dynamic pressure $P_i$.

In this configuration, the moment coefficient $C_M$ is taken into account as a factor that affects a load M applied to the rotor 5, and fatigue is estimated with higher accuracy.

The load M (moment load) due to wind acting on the rotor 5 is calculated from the following equation (3).

$$M = 1 \diagup 2\, \rho\, U^2 C_M A \qquad \cdots (3)$$

In the above equation, M is a load (moment

load), $\rho$ is an air density, U is a mean value of wind velocity, $C_M$ is a moment coefficient, and A is a rotor area.

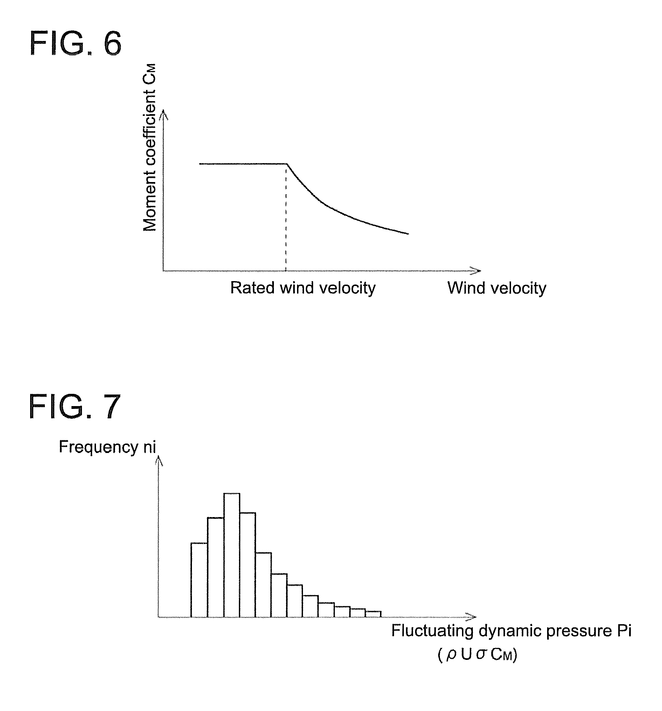

In the wind turbine generator 1, the moment coefficient $C_M$ may vary in accordance with a control of the pitch angles of the blades 2. For instance, in a typical variable-pitch wind turbine, as illustrated in FIG. 6, the pitch angle of the blades 2 is controlled to maintain the power output at the rated output or less, and the moment coefficient $C_M$ decreases in a region with high wind velocity of not less than the rated wind velocity as compared to in a region with the rated wind velocity. Here, FIG. 6 is a graph of a relationship between wind velocity and a moment coefficient.

In view of this, in the above configuration, the frequency-distribution calculation part 14 is configured to calculate the occurrence frequency $n_i$ of the fluctuating dynamic pressure $P_i$ on the basis of a product $X_2'$ (= U × σ × $C_M$) obtained by multiplying the product $X_1$ further by the moment coefficient $C_M$ determined in accordance with a pitch angle of the blades 2, or more specifically, on the basis of a product $X_2'$(= $\rho$ × U × σ × $C_M$) obtained by multiplying the product $X_3$ (= $\rho$ × U × σ) of the mean value U and the standard deviation σ of wind velocity and an air density $\rho$ further by the moment coefficient $C_M$. In this way, it is possible to obtain frequency distribution of a fluctuating dynamic pressure $P_i$ taking account of the moment coefficient $C_M$ as illustrated in FIG. 7. Here, FIG. 7 is a graph of an example of frequency distribution of the fluctuating dynamic pressure $P_i$ ($\rho U\sigma C_M$).

With the above configuration, it is possible to reduce the influence of the pitch control of the wind turbine generator 1 on the fatigue evaluation result, and to perform fatigue evaluation of the wind turbine generator 1 with higher accuracy.

Next, the fatigue estimation by the fatigue estimation part 15 will be described in detail.

In some embodiments, the fatigue estimation part 15 is configured to estimate fatigue on the basis of a comparison result between: reference occurrence-frequency distribution of a fluctuating dynamic pressure $P_i$ corresponding to a known fatigue lifetime related to the wind turbine generator 1; and occurrence frequency distribution of a fluctuating dynamic pressure $P_i$ calculated by the frequency-distribution calculation part.

Specifically, the fatigue estimation part 15 is configured to estimate fatigue on the basis of a ratio $n_i/N_i$ of occurrence frequency $n_i$ of a fluctuating dynamic pressure $P_i$ to occurrence frequency $N_i$ of a fluctuating dynamic pressure $P_i$ in the reference occurrence-frequency distribution.

More specifically, the fatigue estimation part 15 is configured to calculate a fatigue damage level D on the basis of the following equation (1), and to estimate fatigue on the basis of the fatigue damage level D.

$$D = \sum \frac{n_i}{N_i} \qquad \cdots (1)$$

In the above equation, i is a range number of a fluctuating dynamic pressure in the occurrence-frequency distribution or the reference occurrence-frequency distribution.

With the above configuration, it is possible to evaluate, in a quantitative way, the progress of the fatigue using a known fatigue lifetime as a measure, on the basis of a comparison result between: reference occurrence-frequency distribution of a fluctuating dynamic pressure corresponding to a known fatigue lifetime; and occurrence frequency distribution of a fluctuating dynamic pressure calculated by the frequency-distribution calculation part. Further, it is possible to evaluate, in a quantitative way and with high accuracy, the progress of the fatigue using a known fatigue lifetime as a measure, on the basis of a ratio $n_i/N_i$ of occurrence frequency $n_i$ of a fluctuating dynamic pressure $P_i$ calculated by the occurrence frequency calculation part to occurrence frequency $N_i$ of a fluctuating dynamic pressure $P_i$ in the reference occurrence-frequency distribution.

In one embodiment, the known fatigue lifetime is the design lifetime of the wind turbine generator 1, and the reference occurrence-frequency distribution is occurrence-frequency distribution of a fluctuating dynamic pressure taken into account in designing the wind turbine generator 1.

Now, the evaluation of a fatigue lifetime using the design lifetime of the wind turbine generator 1 will be described specifically.

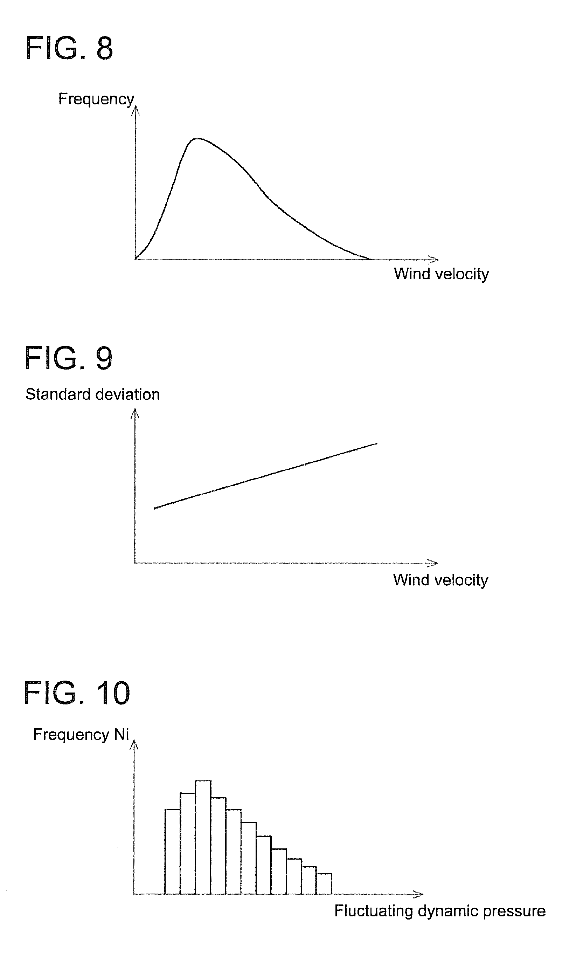

FIG. 8 is a graph of an example of wind-velocity frequency distribution taken into account in designing. FIG. 9 is a graph of an example of wind-velocity standard deviation distribution taken into account in designing. FIG. 10 is a graph of frequency distribution (reference occurrence-frequency distribution) of a fluctuating dynamic pressure taken into account in designing.

As illustrated in FIG. 10, the frequency distribution (reference occurrence frequency distribution) of a fluctuating dynamic pressure taken into account in designing the wind turbine generator 1 is calculated from the wind-velocity frequency distribution taken into account in designing illustrated in FIG. 8 and the wind-velocity standard deviation distribution taken into account in designing illustrated in FIG. 9. Specifically, the frequency distribution of a fluctuating dynamic pressure taken into account in designing the wind turbine generator 1 is calculated from a product of the wind-velocity frequency distribution taken into account in designing, the wind-velocity standard deviation distribution taken into account in designing, and the thrust coefficient $C_T$ or the moment coefficient $C_M$ of the wind turbine generator 1.

Here, the wind-velocity frequency distribution taken into account in designing is obtained by, for instance, estimating a wind-velocity appearance ratio in each range from yearly average wind velocity $U_{ave}$, assuming Rayleigh distribution. Here, the yearly average wind velocity $U_{ave}$ is determined by a design class of the wind turbine generator 1 being subject to evaluation. Further, the wind-velocity standard deviation distribution taken into account in designing is obtained from a standard turbulence model of the IEC standard, for instance. At this time, turbulence determined by the design class of the wind turbine generator 1 being subject to evaluation is used as reference turbulence.

As described above, the frequency distribution of a fluctuating dynamic pressure (reference occurrence frequency distribution) at the time when the wind turbine generator 1 to be evaluated reaches the design lifetime is calculated.

Then, the fatigue estimation part 15 calculates the fatigue damage level D of a target section of the wind turbine generator 1 from the above equation (1) by comparing the occurrence frequency distribution (see FIG. 3) of the fluctuating dynamic pressure $P_i$ up until a current time in actual operation of the wind turbine generator 1 calculated by the statistical processing part 13 and the frequency-distribution calculation part 14 to the frequency distribution (see FIG. 10) of a fluctuating dynamic pressure at the time when the wind turbine generator 1 reaches the design lifetime.

With the above configuration, it is possible to evaluate, in a quantitative way, the progress of the fatigue using a design lifetime as a measure, on the basis of a comparison result between the occurrence frequency distribution of a fluctuating dynamic pressure taken into account in designing the wind turbine generator 1 and actual occurrence frequency distribution of a fluctuating dynamic pressure calculated by the frequency-distribution calculation part.

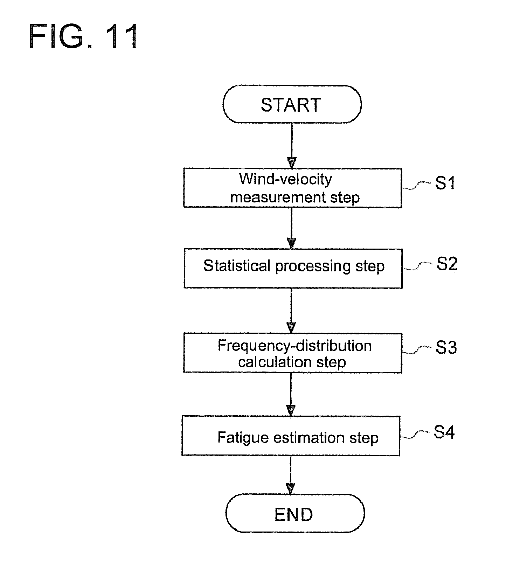

Next, with reference to FIG. 11, the fatigue evaluation method of the wind turbine generator 1 will be described. FIG. 11 is a flowchart of a fatigue evaluation method of the wind turbine generator 1. In the following description, reference numerals illustrated in FIG. 1 are used where appropriate.

In the fatigue evaluation method for the wind turbine generator 1 according to some embodiments, the wind velocity is measured by the anemometer 11 in the wind-velocity measurement step S1.

Next, in the statistical processing step S2, the mean value U and the standard deviation σ of wind velocity are calculated on the basis of the measurement results of wind velocity.

Subsequently, in the frequency distribution calculation step S3, the occurrence frequency distribution of a fluctuating dynamic pressure of wind is calculated on the basis of a product of the mean value U and the standard deviation σ calculated in the statistical processing step S2. At this time, as occurrence-frequency distribution of a fluctuating dynamic pressure of wind, the occurrence frequency $n_i$ of a fluctuating dynamic pressure $P_i$ obtained on the basis of the product $X_1$ (= U × σ) of the mean value U and the standard deviation σ may be calculated. More specifically, as occurrence-frequency distribution of a fluctuating dynamic pressure of wind, occurrence frequency $n_i$ of a fluctuating dynamic pressure $P_i$ obtained on the basis of the product $X_3$ (= ρ × U × σ) of the mean value U, the standard deviation σ of wind velocity, and the air density ρ may be calculated. Here, a fluctuating dynamic pressure $P_i$ is obtained on the basis of the product $X_1$ (= U × σ) of the mean value U and the standard deviation σ of wind velocity, or on the basis of the product $X_3$ (= ρ × U × σ) of the mean value U, the standard deviation σ of wind velocity, and the air density ρ, and the occurrence frequency $n_i$ of the fluctuating dynamic pressure $P_i$ is counted. In this way, it is possible to evaluate fatigue with high accuracy even if time-series data of a load is not available, and to reduce the time for fatigue evaluation.

Alternatively, as occurrence-frequency distribution of a fluctuating dynamic pressure of wind, occurrence frequency $n_i$ of a fluctuating dynamic pressure $P_i$ may be calculated on the basis of a product $X_2$ (= U × σ × $C_T$) or $X_2'$ (=ρ × U × σ × $C_M$) obtained by multiplying the product $X_1$ or the product $X_3$ further by the thrust coefficient $C_T$ or the moment coefficient $C_M$ that is determined in accordance with a pitch angle of the blades 2 of the wind turbine generator 1. In this way, it is possible to reduce the effect of the pitch control of the wind turbine generator 1 on the fatigue evaluation result, and to evaluate fatigue of the wind turbine generator 1 more precisely.

Next, in the fatigue estimation step S4, fatigue of the wind turbine generator is estimated on the basis of the occurrence frequency distribution of a fluctuating dynamic pressure.

In the fatigue estimation step S4, the fatigue is estimated on the basis of a comparison result between: reference occurrence-frequency distribution of a fluctuating dynamic pressure $P_i$ corresponding to a known fatigue lifetime related to the wind turbine generator 1; and occurrence frequency distribution of a fluctuating dynamic pressure calculated in the frequency distribution calculation step. Specifically, in the fatigue estimation step S4, fatigue is estimated on the basis of a ratio $n_i/N_i$ of occurrence frequency $n_i$ of a fluctuating dynamic pressure $P_i$ to occurrence frequency $N_i$ of a fluctuating dynamic pressure $P_i$ in the reference occurrence-frequency distribution. In this case, in the fatigue estimation step S4, the fatigue damage level D may be calculated on the basis of the following equation (1), and the fatigue may be estimated on the basis of the fatigue damage level D.

$$D = \sum \frac{n_i}{N_i} \qquad \cdots (1)$$

In the above equation, i is a range number of a fluctuating dynamic pressure in the occurrence-frequency distribution or the reference occurrence-frequency distribution.

In this way, it is possible to evaluate, in a quantitative way and with higher accuracy, the progress of the fatigue using a known fatigue lifetime as a measure.

With the above method, it is possible to evaluate fatigue on the basis of the occurrence frequency distribution of a fluctuating dynamic pressure calculated on the basis of a product of statistics (the mean value U and the standard deviation σ) of wind velocity, even if time-series data of a load is not available. Further, it is possible to reduce the operation time required to evaluate fatigue as compared to a case where fatigue is evaluated on the basis of occurrence frequency of load amplitude calculated by a known method (e.g. Rainflow method) from time-series data of a load.

Further, in the above method, the known fatigue lifetime may be the design lifetime of the wind turbine generator 1, and the reference occurrence-frequency distribution may be occurrence-frequency distribution of a fluctuating dynamic pressure taken into account in designing the wind turbine generator.

In this way, it is possible to evaluate, in a quantitative way, the progress of the fatigue using the design lifetime of the wind turbine generator 1 as a measure, on the basis of a comparison result between the occurrence frequency distribution of a fluctuating dynamic pressure taken into account in designing the wind turbine generator 1 and actual occurrence frequency distribution of a fluctuating dynamic pressure calculated by the frequency-distribution calculation part.

As described above, according to some embodiments of the present invention, it is possible to perform simplified fatigue evaluation for the wind turbine generator 1 even if time-series data of a load is not available for sections of the wind turbine generator 1, and to reduce the time for fatigue evaluation.

Embodiments of the present invention were described in detail above, but the present invention is not limited thereto, and various amendments and modifications may be implemented within a scope that does not depart from the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

The present invention is not limited the above embodiment, and various amendments and modifications may be implemented within a scope that does not depart from the present invention.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

Description of Reference Numerals

1      Wind turbine generator
2      Blade
3      Hub
4      Rotation shaft
5      Rotor
6      Generator
7      Nacelle
7a     Nacelle base plate
8      Main bearing
9      Tower
10     Fatigue evaluation system
11     Anemometer
12     Arithmetic processing part
13     Statistical processing part
14     Frequency-distribution calculation part
15     Fatigue estimation part

**Claims**

1. A fatigue evaluation system (10) for a wind turbine generator (1), **characterized in that** it comprises:

   an anemometer (11) for measuring wind velocity of wind;
   a statistical processing part (13) for calculating a mean value U and a standard deviation σ of the wind velocity on the basis of a measurement result of the anemometer (11);
   a frequency-distribution calculation part (14) configured to calculate occurrence frequency ($n_i$) distribution of a fluctuating dynamic pressure ($P_i$) of the wind, on the basis of a product of the mean value U and the standard deviation σ calculated by the statistical processing part (13); and
   a fatigue estimation part (15) for estimating fatigue of the wind turbine generator (1), on the basis of the occurrence frequency distribution ($n_i$) of the fluctuating dynamic pressure ($P_i$).

2. The fatigue evaluation system for a wind turbine generator according to claim 1,
   wherein the frequency-distribution calculation part (14) is configured to calculate occurrence frequency ($n_i$) of the fluctuating dynamic pressure ($P_i$) obtained on the basis of a product $X_1$ (= U × σ) of the mean value U and the standard deviation $\sigma$, and wherein the fatigue estimation part (15) is configured to estimate the fatigue on the basis of the occurrence frequency ($n_i$) of the fluctuating dynamic pressure ($P_i$).

3.  The fatigue evaluation system for a wind turbine generator according to claim 2, wherein the frequency-distribution calculation part (14) is configured to calculate the occurrence frequency ($n_i$) of the fluctuating dynamic pressure ($P_i$) on the basis of a product $X_2$ (= $U \times \sigma \times C_T$) obtained by multiplying the product $X_1$ further by a thrust coefficient $C_T$ which is determined in accordance with a pitch angle of a blade (2) of the wind turbine generator (1).

4.  The fatigue evaluation system for a wind turbine generator according to claim 2, wherein the frequency-distribution calculation part (14) is configured to calculate the occurrence frequency ($n_i$) of the fluctuating dynamic pressure ($P_i$) on the basis of a product $X_2$' (= $U \times \sigma \times C_M$) obtained by multiplying the product $X_1$ further by a moment coefficient $C_M$ which is determined in accordance with a pitch angle of a blade (2) of the wind turbine generator (1).

5.  The fatigue evaluation system for a wind turbine generator according to any one of claims 1 to 4, wherein the frequency-distribution calculation part (14) is configured to calculate occurrence frequency ($n_i$) of the fluctuating dynamic pressure ($P_i$) obtained on the basis of a product $X_3$ (= $\rho \times U \times \sigma$) of the mean value U, the standard deviation $\sigma$, and an air density $\rho$, and wherein the fatigue estimation part (15) is configured to estimate the fatigue on the basis of the occurrence frequency ($n_i$) of the fluctuating dynamic pressure ($P_i$).

6.  The fatigue evaluation system for a wind turbine generator according to any one of claims 1 to 5, wherein the fatigue estimation part (15) is configured to estimate the fatigue on the basis of a comparison result between: reference occurrence-frequency distribution of the fluctuating dynamic pressure ($P_i$) corresponding to a known fatigue lifetime related to the wind turbine generator (1), and the occurrence frequency distribution of the fluctuating dynamic pressure ($P_i$) calculated by the frequency-distribution calculation part.

7.  The fatigue evaluation system for a wind turbine generator according to claim 6, wherein the frequency-distribution calculation part (14) is configured to calculate occurrence frequency ($n_i$) of the fluctuating dynamic pressure ($P_i$) obtained

on the basis of a product $X_1$ (= $U \times \sigma$) of the mean value U and the standard deviation $\sigma$, and wherein the fatigue estimation part (15) is configured to estimate the fatigue on the basis of a ratio of the occurrence frequency ($n_i$) of the fluctuating dynamic pressure ($P_i$) calculated by the frequency-distribution calculation part (14) to occurrence frequency ($N_i$) of the fluctuating dynamic pressure ($P_i$) in the reference occurrence-frequency distribution.

8.  The fatigue evaluation system for a wind turbine generator according to claim 7, wherein the fatigue estimation part (15) is configured to calculate a fatigue damage level D on the basis of a following equation (1), and to estimate the fatigue on the basis of the fatigue damage level D:

$$D = \sum \frac{n_i}{N_i} \qquad \cdots \ (1)$$

, where i is a range number of the fluctuating dynamic pressure in the occurrence-frequency distribution or the reference occurrence-frequency distribution, $P_i$ is the fluctuating dynamic pressure of an $i^{th}$ range, $n_i$ is the occurrence frequency of the fluctuating dynamic pressure of $P_i$ in the occurrence frequency distribution, and $N_i$ is the occurrence frequency of the fluctuating dynamic pressure of $P_i$ in the reference occurrence frequency distribution.

9.  The fatigue evaluation system for a wind turbine generator according to any one of claims 6 to 8, wherein the known fatigue lifetime is a design lifetime of the wind turbine generator (1), and wherein the reference occurrence frequency distribution is occurrence frequency distribution of the fluctuating dynamic pressure ($P_i$) taken into account in designing the wind turbine generator (1).

10. A wind turbine generator (1), comprising:

    a rotor (5) configured to rotate by receiving wind;
    a generator (6) to which a rotational force of the rotor (5) is transmitted, the generator (6) being configured to be driven by the rotational force; and
    the fatigue evaluation system (10) according to any one of claims 1 to 9.

11. A method of evaluating fatigue of a wind turbine generator, comprising:

    a wind-velocity measurement step (S1) of measuring wind velocity of wind;
    a statistical processing step (S2) of calculating a mean value U and a standard deviation $\sigma$ of

the wind velocity on the basis of a measurement result of the wind velocity;

a frequency-distribution calculation step (S3) of calculating occurrence frequency distribution of a fluctuating dynamic pressure ($P_i$) of the wind, on the basis of a product of the mean value U and the standard deviation $\sigma$ calculated in the statistical processing step; and

a fatigue estimation step (S4) of estimating fatigue of the wind turbine generator (1), on the basis of the occurrence frequency distribution of the fluctuating dynamic pressure ($P_i$).

12. The method of evaluating fatigue of a wind turbine generator according to claim 11,
wherein the frequency-distribution calculation step (S3) includes calculating occurrence frequency ($n_i$) of the fluctuating dynamic pressure ($P_i$) obtained on the basis of a product $X_1$ (= U $\times \sigma$) of the mean value U and the standard deviation $\sigma$, and
wherein the fatigue estimation step (S4) includes estimating the fatigue on the basis of the occurrence frequency ($n_i$) of the fluctuating dynamic pressure ($P_i$).

13. The method of evaluating fatigue of a wind turbine generator according to claim 11 or 12,
wherein the fatigue estimation step (S4) includes estimating the fatigue on the basis of a comparison result between: reference occurrence-frequency distribution of the fluctuating dynamic pressure ($P_i$) corresponding to a known fatigue lifetime related to the wind turbine generator; and the occurrence frequency distribution of the fluctuating dynamic pressure ($P_i$) calculated in the frequency-distribution calculation step.

14. The method of evaluating fatigue of a wind turbine generator according to claim 13,
wherein the frequency-distribution calculation step (S3) includes calculating occurrence frequency ($n_i$) of the fluctuating dynamic pressure obtained on the basis of a product $X_1$ (= U $\times \sigma$) of the mean value U and the standard deviation $\sigma$, and
wherein the fatigue estimation step (S4) includes estimating the fatigue on the basis of a ratio of the occurrence frequency ($n_i$) of the fluctuating dynamic pressure ($P_i$) calculated in the frequency-distribution calculation step (S3) to occurrence frequency ($N_i$) of the fluctuating dynamic pressure ($P_i$) in the reference occurrence-frequency distribution.

15. The method of evaluating fatigue of a wind turbine generator according to claim 14, wherein the fatigue estimation step (S4) includes calculating a fatigue damage level D on the basis of a following equation (1), and estimating the fatigue on the basis of the fatigue damage level D:

$$D = \sum \frac{n_i}{N_i} \qquad \cdots (1)$$

, where i is a range number of the fluctuating dynamic pressure in the occurrence-frequency distribution or the reference occurrence-frequency distribution, $P_i$ is the fluctuating dynamic pressure of an $i^{th}$ range, $n_i$ is the occurrence frequency of the fluctuating dynamic pressure of $P_i$ in the occurrence frequency distribution, and $N_i$ is the occurrence frequency of the fluctuating dynamic pressure of $P_i$ in the reference occurrence frequency distribution.

16. The method of evaluating fatigue of a wind turbine generator according to any one of claims 13 to 15,
wherein the known fatigue lifetime is a design lifetime of the wind turbine generator (1), and
wherein the reference occurrence frequency distribution is occurrence frequency distribution of the fluctuating dynamic pressure taken into account in designing the wind turbine generator.

# FIG. 1

# FIG. 2

Wind velocity

Time

# FIG. 3

Frequency ni

Fluctuating dynamic pressure Pi

$(\rho \cup \sigma)$

FIG. 4

FIG. 5

FIG. 6

FIG. 7

FIG. 8

Frequency

Wind velocity

FIG. 9

Standard deviation

Wind velocity

FIG. 10

Frequency Ni

Fluctuating dynamic pressure

# FIG. 11

```
          ┌─────────────┐
          │    START    │
          └──────┬──────┘
                 │
                 ▼
        ┌──────────────────┐
        │   Wind-velocity  │ ⌇ S1
        │  measurement step│
        └────────┬─────────┘
                 │
                 ▼
        ┌──────────────────┐
        │Statistical       │ ⌇ S2
        │processing step   │
        └────────┬─────────┘
                 │
                 ▼
        ┌──────────────────┐
        │Frequency-        │ ⌇ S3
        │distribution      │
        │calculation step  │
        └────────┬─────────┘
                 │
                 ▼
        ┌──────────────────┐
        │Fatigue estimation│ ⌇ S4
        │step              │
        └────────┬─────────┘
                 │
                 ▼
          ┌─────────────┐
          │     END     │
          └─────────────┘
```

Europäisches
Patentamt

European
Patent Office

Office européen
des brevets

# EUROPEAN SEARCH REPORT

Application Number

EP 15 18 0809

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/288855 A1 (DESHPANDE AMEET [US]) 25 September 2014 (2014-09-25) * abstract * * paragraph [0007] - paragraph [0008] * * paragraph [0020] * * paragraph [0025] * * paragraph [0027] - paragraph [0037] * * paragraph [0042]; figures 1,2,6 * | 1-16 | INV. F03D17/00 |
| A | EP 2 264 314 A2 (VESTAS WIND SYS AS [DK]) 22 December 2010 (2010-12-22) * abstract * * paragraph [0019] * * paragraph [0028]; figures 4,5,6 * | 1-16 | |
| A | US 2010/138267 A1 (VITTAL SAMEER [US] ET AL) 3 June 2010 (2010-06-03) * abstract * * paragraph [0022]; figures 1-7 * | 1-16 | |
| | | | TECHNICAL FIELDS SEARCHED (IPC) F03D |

The present search report has been drawn up for all claims

| Place of search | Date of completion of the search | Examiner |
|---|---|---|
| The Hague | 19 August 2016 | Westermayer, Philipp |

## ANNEX TO THE EUROPEAN SEARCH REPORT
## ON EUROPEAN PATENT APPLICATION NO.

EP 15 18 0809

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2016

| Patent document cited in search report | | | Publication date | Patent family member(s) | | | Publication date |
|---|---|---|---|---|---|---|---|
| US 2014288855 | A1 | | 25-09-2014 | EP | 2986845 | A1 | 24-02-2016 |
| | | | | US | 2014288855 | A1 | 25-09-2014 |
| | | | | WO | 2014149364 | A1 | 25-09-2014 |
| EP 2264314 | A2 | | 22-12-2010 | CN | 101900079 | A | 01-12-2010 |
| | | | | EP | 2264314 | A2 | 22-12-2010 |
| | | | | ES | 2577530 | T3 | 15-07-2016 |
| | | | | US | 2010298995 | A1 | 25-11-2010 |
| US 2010138267 | A1 | | 03-06-2010 | CN | 102022264 | A | 20-04-2011 |
| | | | | DK | 2290597 | T3 | 18-07-2016 |
| | | | | EP | 2290597 | A2 | 02-03-2011 |
| | | | | ES | 2578019 | T3 | 20-07-2016 |
| | | | | US | 2010138267 | A1 | 03-06-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1760311 A